# EUROPEAN PATENT APPLICATION

(11) **EP 3 282 720 A1**
(43) Date of publication of application: **14.02.2018**
(21) Application number: 16776075.0
(22) Date of filing: 24.03.2016
(51) Int. Cl.: H04W 4/00

(54) **DATA TRANSMISSION METHOD AND DEVICE**

(30) Priority: 10.04.2015 CN 201510170490
(71) Applicant: China Academy of Telecommunications Technology, Haidian District Beijing 100191 (CN)
(72) Inventor: ZHANG, Huiying, Beijing 100191 (CN); QUAN, Haiyang, Beijing 100191 (CN); XU, Fangli, Beijing 100191 (CN)
(74) Representative: Nony
(86) International application number: PCT/CN2016/077249
(87) International publication number: WO 2016/161900

(57) **Abstract**

The present invention relates to the technical field of wireless communications. Particularly disclosed in embodiments of the present invention are a data transmission method and device addressing the problem in the prior art of packet loss resulting from that a UE cannot receive, when transmitting data, data simultaneously transmitted by other UEs in a D2D transmission process. The method of the embodiment of the present invention comprises: selecting, by a first terminal and from a first transmission resource pool of the first terminal, a first resource group to be transmitted by the first terminal; and configuring a second terminal group, such that each second terminal cannot transmit data to the first terminal via a first resource in the first resource group, thus addressing the problem of packet loss resulting from that the UE cannot receive, when transmitting data, the data simultaneously transmitted by other UEs, and further improving a transmission efficiency.

## Description

This application claims priority to Chinese Patent Application No. 201510170490.4, filed with Chinese Patent Office on April 10, 2015 and entitled "Data Transmission Method and Device", the content of which is hereby incorporated by reference in its entirety.

### Field

The present disclosure relates to the technical field of wireless communications technology, and in a particular relates to a data transmission method and device.

### Background

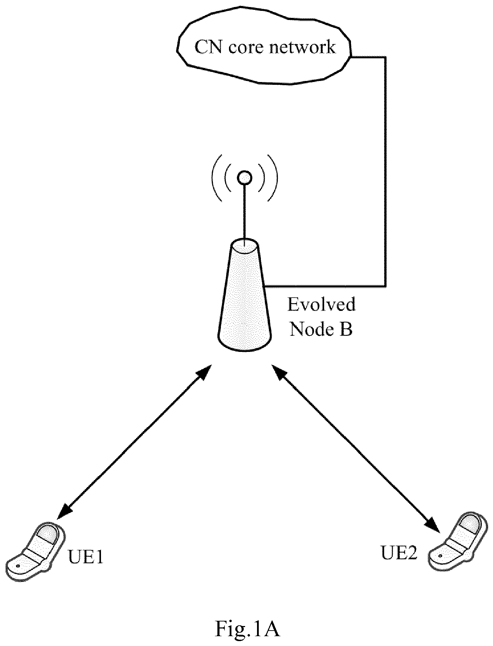

In a long-term evolution (LTE) system, centralized control via a network is adopted, which means both uplink data and downlink data of user equipment (UE) are transmitted and received under the control of the network. Communications between UEs are forwarded and controlled by the network. There is no direct communication link between the UEs, nor is any UE allowed to transmit uplink data by itself, as shown in Fig. 1A.

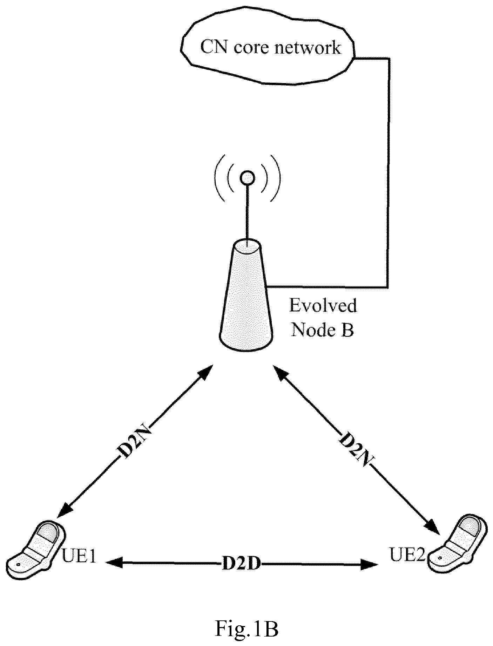

Device-to-Device (D2D) technology, i.e. user equipment direct communication technology, means that adjacent user equipment can transmit data within a short distance via a direct link, without forwarding data via a central node (i.e. base station), as shown in Fig. 1B.

In 3rd Generation Partnership Project (3GPP), D2D proximity services include the following two categories.

D2D discovery: a UE determines through Evolved-Universal Terrestrial Radio Access (E-UTRA) that another UE is nearby. For example, a D2D UE can use this service to find a taxi or a friend nearby.

D2D communication: UEs close to each other directly establish a link therebetween, so that a communication link originally via network transmission is converted into a local direct communication link, thereby saving much bandwidth and increasing network efficiency; or two UEs close to each other can obtain a stable, high-speed and inexpensive communication service via direct link communication. Proximity service communication is generally carried out under the control or assistance of a network-side device, and an evolved Node B (eNB) may even dynamically allocate resources to UEs performing proximity service communication.

Currently, there are two types of links in D2D communication:

D2D link: a link through which devices communicate with each other directly; and

D2N link: a link through which a device and a network node communicate with each other.

There are two roles for UEs involved in D2D discovery/communication:

D2D transmission UE: UE that transmits a D2D discovery/communication message; and

D2D reception UE: UE that receives a discovery/communication message transmitted by a D2D transmission UE.

An interface for direct interaction between UEs, known as a PC5 interface, is introduced into 3GPP Release-12.

Based on D2D discovery and communication technologies, a UE can communicate data with a network via a relay.

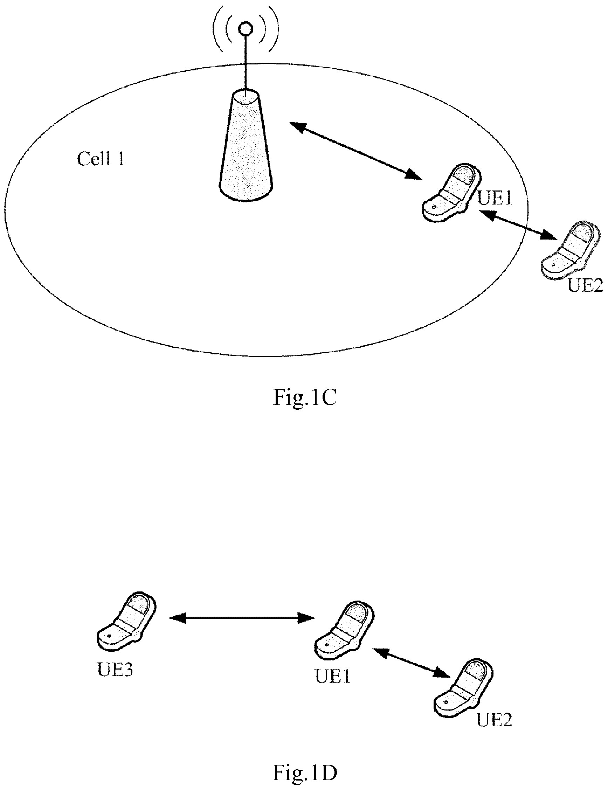

The way in which the UE communicates with the network through a relay UE is called UE-to-Network relay, as shown in Fig. 1C. To enable a UE2 beyond network coverage to communicate with the network, a UE1 is used as a relay node so as to forward unlink and downlink signals of the UE2. UE1 and the UE2 communicate with each other via D2D communication, and the UE1 and the network communicate with each other via cellular communication.

Relay UE: a UE that provides a relay service to other UE.

Remote UE: UE beyond network coverage that communicates with the network through a relay node.

The way in which a UE discovers/communicates with a target UE through a relay UE is called UE-to-UE relay, as shown in Fig. 1D. To enable a UE2 to communicate with a UE3 beyond direct communication coverage of the UE2, a UE1 can be used to forward information of the UE2, where data transmission between the UE1 and the UE2 and between the UE1 and the UE3 is achieved through D2D communication.

Existing D2D discovery and communication services are both achieved in a half-duplex manner. That is, a UE cannot receive data when a PC5 interface is transmitting data. This is not serious for non-relay scenarios. However, in the case where a relay UE is used and may provide services to multiple remote UEs, as the relay UE cannot receive data while transmitting data, loss of large quantities of packages might be caused.

In summary, at present, during D2D transmission, a UE cannot receive, when transmitting data, data transmitted at the same time by other UEs, thus resulting in package loss.

### Summary

Embodiments of the present disclosure provide a data transmission method and device, to solve the problem in the prior art of package loss resulting from that a UE cannot receive, when transmitting data, data transmitted at the same time by other UEs during D2D transmission.

A data transmission method according to an embodiment of the present disclosure includes:
selecting, by a first terminal, from a first transmission resource pool of the first terminal, a first set of resources used for transmission by the first terminal;
configuring, by the first terminal, for a set of second terminals, so that each second terminal in the set of second terminals does not transmit data to the first terminal via a first resource in the first set of resources.

In a possible implementation, the first terminal determines the first set of resources by means of:
determining, by the first terminal, the first set of resources from the first transmission resource pool based on traffic transmitted to the set of second terminals.

In a possible implementation, configuring, by the first terminal, for each second terminal includes:
notifying, by the first terminal, the set of second terminals of the first set of resources;
   and/or
notifying, by the first terminal, each second terminal of a corresponding second set of resources;
where the second set of resources include second resources able to be used for transmission by the second terminal, and the first set of resources are different from the second set of resources.

In a possible implementation, the first terminal determines the second set of resources by means of:
determining, by the first terminal, the second set of resources corresponding to each second terminal from a candidate resource pool based on the first set of resources in the first transmission resource pool of the first terminal;
where the candidate resource pool is a D2D interface reception resource pool or a pre-configured transmission resource pool.

In a possible implementation, determining, by the first terminal, the second set of resources corresponding to each second terminal from a candidate resource pool based on the first set of resources in the first transmission resource pool of the first terminal includes:
using, by the first terminal, a part or all of resources which do not belong to the first set of resources in the candidate resource pool to form the second set of resources; and using the second set of resources as the second set of resources corresponding to each second terminal; or
determining, by the first terminal, all resources which do not belong to the first set of resources in the candidate resource pool to form a specified set of resources; and for one second terminal, determining, by the first terminal, from the specified set of resources a second set of resources corresponding to the second terminal based on traffic of the second terminal.

In a possible implementation, the first terminal configures for each second terminal by means of a part or all of the following:
a broadcast message of a D2D interface;
a dedicated message of the D2D interface; and
a Media Access Control layer Control Element (MAC CE) of the D2D interface.

Another data transmission method according to an embodiment of the present disclosure includes:
determining, by a second terminal, a first set of resources in a first transmission resource pool of a first terminal, and a second set of resources corresponding to the second terminal in a candidate resource pool, based on configuration by the first terminal, where the candidate resource pool is a D2D interface reception resource pool or a pre-configured transmission resource pool; the first set of resources include first resources able to be used for transmission by the first terminal, and the second set of resources include second resources able to be used for transmission by the second terminal, and the first set of resources are different from the second set of resources;
selecting, by the second terminal, from the second set of resources a second resource in a second transmission resource pool of the second terminal; and
transmitting, by the second terminal, data to the first terminal via the selected second resource, but not transmitting data to the first terminal via a first resource in the first set of resources.

In a possible implementation, determining, by a second terminal, a first set of resources in a first transmission resource pool of a first terminal, and a second set of resources corresponding to the second terminal in a candidate resource pool, based on configuration by the first terminal includes:
determining, by the second terminal, the first set of resources in the first transmission resource pool of the first terminal, and the second set of resources corresponding to the second terminal in the candidate resource pool, based on the second set of resources corresponding to the second terminal notified of by the first terminal and/or the first set of resources notified of by the first terminal.

In a possible implementation, transmitting, by the second terminal, data to the first terminal via the selected second resource further includes:
transmitting, by the second terminal, data to the first terminal via the selected second resource and via a resource which does not belong to the first set of resources in the second transmission resource pool of the second terminal, if the selected second resource is not enough for transmission of the data.

In a possible implementation, the second terminal receives the notification from the first terminal by means of a part or all of the following:
a broadcast message of a D2D interface;
a dedicated message of the D2D interface; and
an MAC CE of the D2D interface.

In a possible implementation, the first set of resources of the first terminal and the second set of resources of the second terminal are time-division multiplexed; and/or
the second set of resources corresponding to different second terminals are time-division multiplexed and/or frequency-division multiplexed.

A first terminal for data transmission according to an embodiment of the present disclosure includes:
a first selection module configured to select, from a first transmission resource pool of the first terminal, a first set of resources used for transmission by the first terminal;
a configuration module configured to configure for a set of second terminals, so that each second terminal in the set of second terminals does not transmit data to the first terminal via a first resource in the first set of resources.

In a possible implementation, the first selection module is further configured to determine the first set of resources by means of:
determining the first set of resources from the first transmission resource pool based on traffic transmitted to the set of second terminals.

In a possible implementation, the configuration module is specifically configured to:
notify the set of second terminals of the first set of resources; and/or notify each second terminal of a corresponding second set of resources;
where the second set of resources include second resources able to be used for transmission by the second terminal, and the first set of resources are different from the second set of resources.

In a possible implementation, the first selection module is further configured to determine the second set of resources by means of:
determining the second set of resources corresponding to each second terminal from a candidate resource pool based on the first set of resources in the first transmission resource pool of the first terminal;
where the candidate resource pool is a D2D interface reception resource pool or a pre-configured transmission resource pool.

In a possible implementation, the first selection module is specifically configured to:
use a part or all of resources which do not belong to the first set of resources in the candidate resource pool to form the second set of resources; and use the second set of resources as the second set of resources corresponding to each second terminal; or
determine all resources which do not belong to the first set of resources in the candidate resource pool to form a specified set of resources; and for one second terminal, determine from the specified set of resources a second set of resources corresponding to the second terminal based on traffic of the second terminal;
where the second set of resources corresponding to different second terminals are different.

A second terminal for data transmission according to an embodiment of the present disclosure includes:
a determination module configured to determine a first set of resources in a first transmission resource pool of a first terminal, and a second set of resources corresponding to the second terminal in a candidate resource pool, based on configuration by the first terminal, where the candidate resource pool is a D2D interface reception resource pool or a pre-configured transmission resource pool; the first set of resources include first resources able to be used for transmission by the first terminal, and the second set of resources include second resources able to be used for transmission by the second terminal, and the first set of resources are different from the second set of resources;
a second selection module configured to select from the second set of resources a second resource in a second transmission resource pool of the second terminal; and
a transmission module configured to transmit data to the first terminal via the selected second resource, but not to transmit data to the first terminal via a first resource in the first set of resources.

In a possible implementation, the determination module is specifically configured to:
determine the first set of resources in the first transmission resource pool of the first terminal, and the second set of resources corresponding to the second terminal in the candidate resource pool, based on the second set of resources corresponding to the second terminal notified of by the first terminal and/or the first set of resources notified of by the first terminal.

In a possible implementation, the transmission module is further configured to:
transmit data to the first terminal via the selected second resource and via a resource which does not belong to the first set of resources in the second transmission resource pool of the second terminal, if the selected second resource is not enough for transmission of the data.

In a possible implementation, the first set of resources of the first terminal and the second set of resources of the second terminal are time-division multiplexed; and/or
the second set of resources corresponding to different second terminals are time-division multiplexed and/or frequency-division multiplexed.

A first terminal for data transmission according to an embodiment of the present disclosure includes:
a processor configured to read a program from a memory to perform the following operations:
   selecting from a first transmission resource pool of the first terminal a first set of resources used for transmission by the first terminal; and configuring, through a transceiver, for a set of second terminals, so that each second terminal in the set of second terminals does not transmit data to the first terminal via a first resource in the first set of resources.

In a possible implementation, the processor is further configured to determine the first set of resources by means of:
determining the first set of resources from the first transmission resource pool based on traffic transmitted to the set of second terminals.

In a possible implementation, the processor is specifically configured to:
notify the set of second terminals of the first set of resources; and/or notify each second terminal of a corresponding second set of resources;
where the second set of resources include second resources able to be used for transmission by the second terminal, and the first set of resources are different from the second set of resources.

In a possible implementation, the processor is further configured to determine the second set of resources by means of:
determining the second set of resources corresponding to each second terminal from a candidate resource pool based on the first set of resources in the first transmission resource pool of the first terminal;
where the candidate resource pool is a D2D interface reception resource pool or a pre-configured transmission resource pool.

In a possible implementation, the processor is specifically configured to:
use a part or all of resources which do not belong to the first set of resources in the candidate resource pool to form the second set of resources; and use the second set of resources as the second set of resources corresponding to each second terminal; or
determine all resources which do not belong to the first set of resources in the candidate resource pool to form a specified set of resources; and for one second terminal, determine from the specified set of resources a second set of resources corresponding to the second terminal based on traffic of the second terminal.

In a possible implementation, the processor is specifically configured to configure for each second terminal by means of a part or all of the following:
a broadcast message of a D2D interface;
a dedicated message of the D2D interface; and
an MAC CE of the D2D interface.

A second terminal for data transmission according to an embodiment of the present disclosure includes:
a processor configured to read a program from a memory to perform the following operations:
   determining a first set of resources in a first transmission resource pool of a first terminal, and a second set of resources corresponding to the second terminal in a candidate resource pool, based on configuration by the first terminal, where the candidate resource pool is a D2D interface reception resource pool or a pre-configured transmission resource pool; the first set of resources include first resources able to be used for transmission by the first terminal, and the second set of resources include second resources able to be used for transmission by the second terminal, and the first set of resources are different from the second set of resources; selecting from the second set of resources a second resource in a second transmission resource pool of the second terminal; and controlling a transceiver 602 to transmit data to the first terminal via the selected second resource, but not to transmit data to the first terminal via a first resource in the first set of resources.

In a possible implementation, the processor is specifically configured to:
determine the first set of resources in the first transmission resource pool of the first terminal, and the second set of resources corresponding to the second terminal in the candidate resource pool, based on the second set of resources corresponding to the second terminal notified of by the first terminal and/or the first set of resources notified of by the first terminal.

In a possible implementation, the processor is further configured to:
transmit data to the first terminal via the selected second resource and via a resource which does not belong to the first set of resources in the second transmission resource pool of the second terminal, if the selected second resource is not enough for transmission of the data.

In a possible implementation, the second terminal receives the notification from the first terminal by means of a part or all of the following:
a broadcast message of a D2D interface;
a dedicated message of the D2D interface; and
an MAC CE of the D2D interface.

In a possible implementation, the first set of resources of the first terminal and the second set of resources of the second terminal are time-division multiplexed; and/or
the second set of resources corresponding to different second terminals are time-division multiplexed and/or frequency-division multiplexed.

In the embodiments of the present disclosure, a first terminal selects from a first transmission resource pool of the first terminal a first set of resources used for transmission by the first terminal; and configures for a set of second terminals, so that each second terminal does not transmit data to the first terminal via a first resource in the first set of resources, as the second terminal do not transmit data to the first terminal via the first resource in the first set of resources, package loss resulting from the fact that a UE cannot receive, when transmitting data, data transmitted at the same time by other UEs are avoided, and transmission efficiency is further improved.

### Brief Description of the Drawings

Fig. 1A is a schematic diagram of communication between UEs in a cellular network of the prior art;
Fig. 1B is a schematic diagram of direct connection communication between UEs in the prior art;
Fig. 1C is a schematic diagram of UE-to-Network Relay in the prior art;
Fig. 1D is a schematic diagram of UE-to-UE Relay in the prior art;
Fig. 2A is a schematic structural diagram of a data transmission system according to an embodiment of the present disclosure;
Fig. 2B is a schematic diagram of a resource pool according to an embodiment of the present disclosure;
Fig. 3 is a schematic structural diagram of a first terminal in a data transmission system according to an embodiment of the present disclosure;
Fig. 4 is a schematic structural diagram of a second terminal in a data transmission system according to an embodiment of the present disclosure;
Fig. 5 is a schematic structural diagram of a first terminal of another type in a data transmission system according to an embodiment of the present disclosure;
Fig. 6 is a schematic structural diagram of a second terminal of another type in a data transmission system according to an embodiment of the present disclosure;
Fig. 7 is a schematic flow chart of a data transmission method according to an embodiment of the present disclosure; and
Fig. 8 is a schematic flow chart of a data transmission method according to an embodiment of the present disclosure.

### Detailed Description of the Embodiments

In the embodiments of the present disclosure, a first terminal selects from a first transmission resource pool of the first terminal a first set of resources used for transmission by the first terminal; and configures for a set of second terminals, so that each second terminal does not transmit data to the first terminal via a first resource in the first set of resources, as the second terminal do not transmit data to the first terminal via the first resource in the first set of resources, package loss resulting from the fact that a UE cannot receive, when transmitting data, data transmitted at the same time by other UEs are avoided, and transmission efficiency is further improved.

In the embodiments of the present disclosure, the first terminal may be a relay UE; and the second terminal may be a remote UE.

The embodiments of the present disclosure are further described in detail below in conjunction with the drawings.

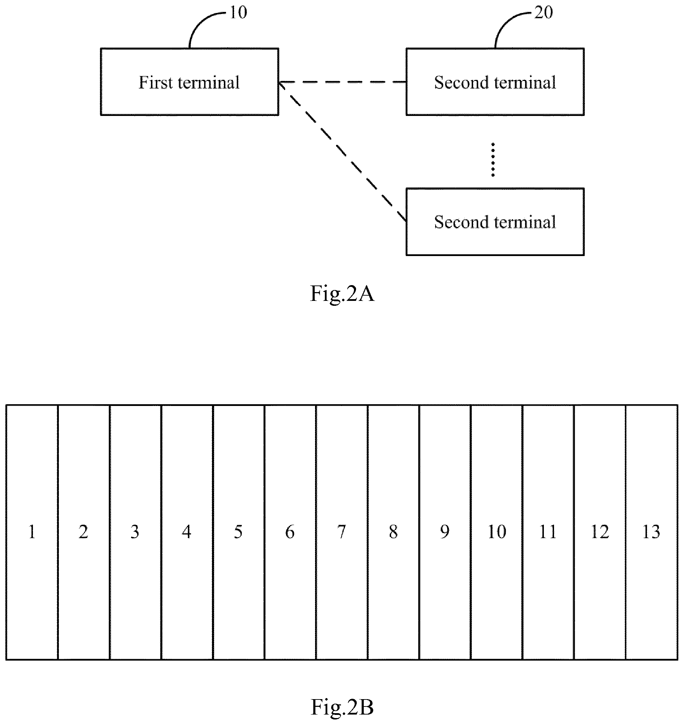

As shown in Fig. 2A, a data transmission system according to an embodiment of the present disclosure includes a first terminal 10 and at least one second terminal 20.

The first terminal 10 is configured to select from a first transmission resource pool of the first terminal a first set of resources used for transmission by the first terminal, and configure for a set of second terminals, so that each second terminal in the set of second terminals does not transmit data to the first terminal via a first resource in the first set of resources;

Each of the at least one second terminal 20 is configured to determine the first set of resources in the first transmission resource pool of the first terminal, and determine a second set of resources corresponding to the second terminal in a candidate resource pool, based on configuration by the first terminal; select from the second set of resources a second resource in a second transmission resource pool of the second terminal; and transmit data to the first terminal via the selected second resource, but not transmit data to the first terminal via the first resource in the first set of resources.

Each of the at least one second terminal is a terminal that transmits and receives data by using the first terminal as a relay.

In implementation, the first terminal divides a transmission resource pool into a first set of resources used for transmission by the first terminal and a second set of resources used for transmission by the at least one second terminal.

Optionally, the first terminal determines the first set of resources, and then determines that resources in the transmission resource pool which do not belong to the first set of resources belong to the second set of resources.

When determining the first set of resources, the first terminal determines the first set of resources from the first transmission resource pool based on traffic transmitted to the set of the second terminals.

For example, the first terminal serves for a second terminal 1 and a second terminal 2 at the same time. The second terminal 1 is provided with a voice service with traffic of 12.2kbps, and the second terminal 2 is provided with a video service with traffic of 64kbps.

The first terminal calculates the traffic transmitted to both the second terminal 1 and the second terminal 2 to be 76.2kbps, with each data packet being transmitted four times, calculates the resources required for each transmission to be 20 (this is just an example provided here, and the resources required need to be determined specifically according to a configuration) Physical Resource Blocks (PRBs) in one subframe within 10ms according to a channel configuration, and selects, from the resource pool, a subframe that meets a transmission condition (a limitation such as Time Repetition Patterns for Transmission (T-RPT) should be satisfied by transmission and retransmission subframes).

It needs to be noted that the above-mentioned way of determining the first set of resources from the first transmission resource pool based on traffic transmitted to all the second terminals is just an example for illustration, and other ways capable of determining the first set of resources from the first transmission resource pool are all applicable to the embodiments of the present disclosure.

In implementation, there are various ways for the first terminal to configure for each of the at least one second terminal, and a few of them are listed below.

First way of configuration: the first terminal notifies the at least one second terminal of the first set of resources.

In this manner, the first terminal directly notifies the at least one second terminal of resources contained in the first set of resources.

Accordingly, the second terminal determines the first set of resources in the first transmission resource pool of the first terminal, and the second set of resources corresponding to the second terminal in the candidate resource pool, based on the first set of resources notified of by the first terminal.

Optionally, the at least one second terminal may use all other resources in the candidate resource pool which do not belong to the first set of resources to form the second set of resources; or may also select a part or all of the resources which do not belong to the first set of resources to form the second set of resources based on traffic to be transmitted by the second terminal.

In implementation, the first terminal configures for each second terminal by means of a part or all of the following:

a broadcast message of a D2D interface;

a dedicated message of the D2D interface; and

an MAC CE of a D2D interface.

It needs to be noted that the D2D interface according to the embodiments of the present disclosure may be a PC5 interface.

Second way of configuration: the first terminal notifies each second terminal of a corresponding second set of resources, where the second set of resources include second resources able to be used for transmission by the second terminal, and the first set of resources are different from the second set of resources; and

Accordingly, the second terminal determines the first set of resources in the first transmission resource pool of the first terminal, and the second set of resources corresponding to the second terminal in the candidate resource pool, based on the second set of resources corresponding to the second terminal notified of by the first terminal.

Optionally, the second terminal may use all resources in the candidate resource pool which do not belong to the first set of resources to form the second set of resources; and may also select a part or all of the resources which do not belong to the first set of resources to form the second set of resources based on traffic to be transmitted by the second terminal.

In implementation, the first terminal configures for each second terminal by means of a part or all of the following:

a broadcast message of a D2D interface;

a dedicated message of the D2D interface; and

an MAC CE of the D2D interface.

In the second way of configuration, the first terminal needs to determine the second set of resources corresponding to each second terminal.

Optionally, the first terminal determines the second set of resources corresponding to each second terminal from the candidate resource pool based on the first set of resources in the first transmission resource pool of the first terminal;

where the candidate resource pool is a D2D interface reception resource pool or a pre-configured transmission resource pool.

In implementation, the D2D interface reception resource pool is pre-configured for the first terminal and the second terminal, and the first transmission resource pool of the first terminal and the second transmission resource pool of the second terminal are both a part of the D2D interface reception resource pool.

If the candidate resource pool is the pre-configured transmission resource pool, the pre-configured transmission resource pool is also a part of the D2D interface reception resource pool.

In implementation, the first set of resources of the first terminal and the second set of resources of the second terminal are time-division multiplexed; and/or

The second set of resources corresponding to different second terminals are time-division multiplexed and/or frequency-division multiplexed.

When determining the second set of resources corresponding to each second terminal from the candidate resource pool based on the first set of resources in the first transmission resource pool of the first terminal, the first terminal can determine a same second set of resources for all second terminals.

Specifically, the first terminal uses a part or all of resources which do not belong to the first set of resources in the candidate resource pool to form the second set of resources; and use the second set of resources as the second set of resources corresponding to each second terminal.

In order to avoid strong interference resulting from selecting same resources for second terminals served by the same first terminal to transmit data, the first terminal may also specify, for different second terminals, transmission resources for use, based on traffic of each second terminal.

Specifically, the first terminal determines all resources which do not belong to the first set of resources in the candidate resource pool to form a specified set of resources; and for one second terminal, determines from the specified set of resources the second set of resources corresponding to the second terminal based on traffic of the second terminal; where the second set of resources corresponding to different second terminals are different.

For example, if the candidate resource pool includes resources 1-10, and the first set of resources include resources 1 and 3, then the first terminal uses the resource 2 and the resources 4-10 to form the specified set of resources.

Supposing there are two second terminals, A and B, the first terminal selects the resources 2 and 4 from the resource 2 and the resources 4-10 as the second set of resources corresponding to the second terminal A, based on traffic of the second terminal A; and for the second terminal B, selects a part or all of resources from the resources 5-10 as the second set of resources corresponding to the second terminal B, based on traffic of the second terminal B.

The way of determining, by the first terminal, from the specified set of resources a second set of resources corresponding to a second terminal based on traffic of the second terminal is similar to the way of determining, by the first terminal, the first set of resources from the first transmission resource pool based on traffic of all the second terminals, and will not be repeated here.

Third configuration way: the first way of configuration and the second way of configuration are combined. That is, the abovementioned first way of configuration and second way of configuration are used together for configuration.

The abovementioned several ways of configuration for each second terminal are merely examples for illustration, and all other ways of configuration for the second terminal are applicable to the embodiments of the present disclosure.

Optionally, the second terminal transmits data to the first terminal via the selected second resource and via a resource which does not belong to the first set of resources in the second transmission resource pool of the second terminal, if the selected second resource is not enough for transmission of the data. That is, if the second resource selected by the second terminal is not enough for transmission of the data, the second terminal can also transmit data to the first terminal via another resource which does not belong to the first set of resources in the second transmission resource pool.

The solution of the present disclosure will be explained in detail by using several examples below.

Example 1: a relay UE indicates to remote UEs some resources used for transmission data by the relay UE.

As shown in Fig. 2B, an on-line or off-line D2D interface reception resource pool includes resources in one or more subframes within a period of resource blocks 1-13, where each resource block consists of a plurality of physical resource units, and the sizes of the resource blocks may be different.

The resource blocks 1-5 form a first transmission resource pool of the relay UE, and the resource blocks 1-4 and 6-8 form a transmission resource pool of the remote UEs.

The relay UE determines, based on traffic of all the remote UEs it serves, to use the resource blocks 1, 2 and 5 as a first set of resources, and notifies each remote UE of physical resource information corresponding to the resource blocks 1, 2 and 5.

Receiving the above-mentioned information transmitted by the relay UE, the remote UEs compare it with resource blocks in a second transmission resource pool thereof, and mark same resources (i.e. the resource blocks 1 and 2) as transmission resources of the relay UE, which cannot be used to transmit data to the relay UE, and the remote UEs can only use resource blocks which are not the transmission resources of the relay UE (i.e. the resource blocks 3, 4, 6, 7 and 8) in the transmission resource pool to transmit data to the relay UE.

It needs to be noted that Fig. 2B shows abstracted D2D resource blocks; however, in practical configuration, the resource blocks are corresponding to specific frames, subframes, time slots and PRBs according to the period of SCI. For example, if the SCI period is 40ms, then the resource block 1 are corresponding to all D2D PRBs in the second subframe of the first radio frame within the period of 40ms, and the resource block 2 is corresponding to all D2D PRBs in the seventh subframe of the first radio frame within the period of 40ms, and so on. The sizes of the resource blocks may also be different. To facilitate understanding, description of the resource blocks is simplified here.

Example 2: a relay UE indicates to remote UEs some resources able to be used by the remote UEs to transmit data.

As shown in Fig. 2B, an on-line or off-line D2D interface reception resource pool includes resources in one or more subframes within a period of resource blocks 1-13, where each resource block consists of a plurality of physical resource units, and the sizes of the resource blocks may be different.

The resource blocks 1-5 form a first transmission resource pool of the relay UE, and the resource blocks 1-4 and 6-8 form a transmission resource pool of the remote UEs.

The relay UE determines, based on traffic of all the remote UEs it serves, to use the resource blocks 1, 2 and 5 as a first set of resources, and the relay UE notifies each remote UE of physical resource information corresponding to the other resource blocks (i.e. the resource blocks 3, 4, and 6-13) in the reception resource pool.

Receiving the above-mentioned information transmitted by the relay UE, the remote UEs compare it with resource blocks in a second transmission resource pool thereof, and mark same resources (i.e. the resource blocks 3, 4, 6, 7 and 8) as transmission resources available to the remote UEs that can be used for transmitting data to the relay UE, and resource blocks (i.e. the resource blocks 1 and 2) in the transmission resource pool not marked as the transmission resources available to the remote UE cannot be used for transmitting data to the relay UE.

Example 3: a relay UE indicates to each remote UE a part of all the resources able to be used by the remote UEs to transmit data.

The relay UE serves three remote UEs, a remote UE1, a remote UE2 and a remote UE3.

As shown in Fig. 2B, an on-line or off-line D2D interface reception resource pool includes resources in one or more subframes within a period of resource blocks 1-13, where each resource block consists of a plurality of physical resource units, and the sizes of the resource blocks may be different.

The resource blocks 1-5 form a first transmission resource pool of the relay UE, and the resource blocks 1-4 and 6-8 form a transmission resource pool of the remote UEs.

The resource blocks allocated by the relay UE to the plurality of remote UEs may be divided by time domains, which means different resource blocks are in different time slots or subframes, and may also be divided by frequency domains, which means different resource blocks are in different PRBs.

The relay UE determines, based on traffic of all the remote UEs it serves, to use the resource blocks 1, 2 and 5 as a first set of resources, then the relay UE determines, based on traffic of each remote UE in conjunction with a pre-configured transmission resource pool, that the remote UE1 needs to use the resource blocks 6 and 7 for transmission, the remote UE2 needs to use the resource block 8 for transmission, and the remote UE3 needs to use the resource block 3 for transmission, and then the relay UE notifies each remote UE of physical resource information corresponding to the transmission resource blocks allocated to the remote UE.

Receiving the above-mentioned information transmitted by the relay UE, each remote UE compares it with resource blocks in a second transmission resource pool thereof, and marks same resources (i.e. the resource blocks 6 and 7 for the remote UE1; the resource block 8 for the remote UE2; and the resource block 3 for the remote UE3) as transmission resource available to the remote UE that can be used for transmitting data to the relay UE, and resource blocks in the transmission resource pool not marked as the transmission resources available to the remote UE cannot be used for transmitting data to the relay UE.

### Example 4:

In conjunction with example 3, each remote UE preferentially selects the transmission resource(s) configured by the relay UE for the remote UE (i.e. the resource blocks 6 and 7 for the remote UE1; the resource block 8 for the remote UE2; and the resource block 3 for the remote UE3), or preferentially selects other resource blocks other than the transmission resources of the relay UE in the second resource pool (i.e. the resource blocks 3, 4 and 8 for the remote UE1; the resource blocks 3, 4, 6 and 7 for the remote UE2; and the resource blocks 4, 6, 7 and 8 for the remote UE3) in the case of resource deficiency or other abnormality.

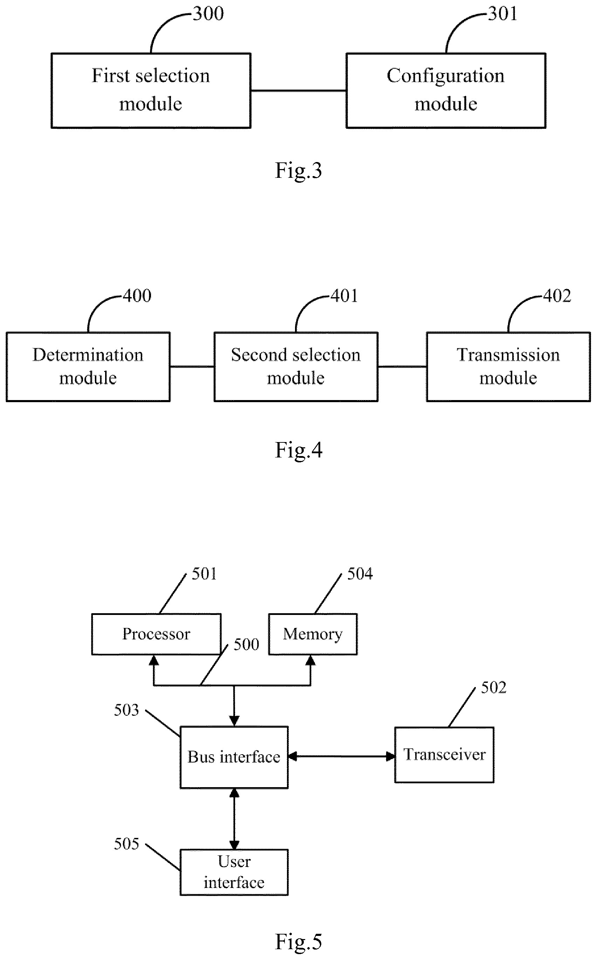

As shown in Fig. 3, a first terminal of a data transmission system according to an embodiment of the present disclosure includes:
a first selection module 300 configured to select, from a first transmission resource pool of the first terminal, a first set of resources used for transmission by the first terminal;
a configuration module 301 configured to configure for a set of second terminals, so that each second terminal in the set of second terminals does not transmit data to the first terminal via a first resource in the first set of resources.

Optionally, the first selection module 300 is further configured to determine the first set of resources by means of:
determining the first set of resources from the first transmission resource pool based on traffic transmitted to the set of second terminals.

Optionally, the configuration module 301 is specifically configured to:
notify the set of second terminals of the first set of resources; and/or notify each second terminal of a corresponding second set of resources;
where the second set of resources include second resources able to be used for transmission by the second terminal, and the first set of resources are different from the second set of resources.

Optionally, the first selection module 300 is further configured to determine the second set of resources by means of:
determining the second set of resources corresponding to each second terminal from a candidate resource pool based on the first set of resources in the first transmission resource pool of the first terminal;
where the candidate resource pool is a D2D interface reception resource pool or a pre-configured transmission resource pool.

Optionally, the first selection module 300 is specifically configured to:
use a part or all of resources which do not belong to the first set of resources in the candidate resource pool to form the second set of resources; and use the second set of resources as the second set of resources corresponding to each second terminal.

Optionally, the first selection module 300 is specifically configured to:
determine all resources which do not belong to the first set of resources in the candidate resource pool to form a specified set of resources; and
for one second terminal, determine from the specified set of resources a second set of resources corresponding to the second terminal based on traffic of the second terminal;
where the second set of resources corresponding to different second terminals are different.
optionally, the configuration module 301 is specifically configured to configure for each second terminal by means of a part or all of the following:
a broadcast message of a D2D interface;
a dedicated message of the D2D interface; and
an MAC CE of the D2D interface.

As shown in Fig. 4, a second terminal of a data transmission system according to an embodiment of the present disclosure includes:
a determination module 400 configured to determine a first set of resources in a first transmission resource pool of a first terminal, and a second set of resources corresponding to the second terminal in a candidate resource pool, based on configuration by the first terminal, where the candidate resource pool is a D2D interface reception resource pool or a pre-configured transmission resource pool; the first set of resources include first resources able to be used for transmission by the first terminal, and the second set of resources include second resources able to be used for transmission by the second terminal, and the first set of resources are different from the second set of resources;
a second selection module 401 configured to select from the second set of resources a second resource in a second transmission resource pool of the second terminal; and
a transmission module 402 configured to transmit data to the first terminal via the selected second resource, but not to transmit data to the first terminal via a first resource in the first set of resources.

Optionally, the determination module 400 is specifically configured to:
determine the first set of resources in the first transmission resource pool of the first terminal, and the second set of resources corresponding to the second terminal in the candidate resource pool, based on the second set of resources corresponding to the second terminal notified of by the first terminal and/or the first set of resources notified of by the first terminal.

Optionally, the transmission module 402 is further configured to:
transmit data to the first terminal via the selected second resource and via a resource which does not belong to the first set of resources in the second transmission resource pool of the second terminal, if the selected second resource is not enough for transmission of the data.

Optionally, the second terminal receives the notification from the first terminal by means of a part or all of the following:
a broadcast message of a D2D interface;
a dedicated message of the D2D interface; and
an MAC CE of the D2D interface.

Optionally, the first set of resources of the first terminal and the second set of resources of the second terminal are time-division multiplexed; and/or
the second set of resources corresponding to different second terminals are time-division multiplexed and/or frequency-division multiplexed.

In implementation, for different scenarios, a terminal may be a first terminal or a second terminal, so functions of the first terminal and the second terminal may be combined in one entity (i.e. modules of the first terminal in Fig. 3 and the second terminal in Fig. 4 are in one entity), and the function of the first terminal or the function of the second terminal is selected for use according to need.

As shown in Fig. 5, another type of first terminal of a data transmission system according to an embodiment of the present disclosure includes:
a processor 501 configured to read a program from a memory 504 to perform the following operations:
selecting from a first transmission resource pool of the first terminal a first set of resources used for transmission by the first terminal; and configuring, through a transceiver 502, for a set of second terminals, so that each second terminal in the set of second terminals does not transmit data to the first terminal via a first resource in the first set of resources.

The transceiver 502 is configured to receive and transmit data under the control of the processor 501.

Optionally, the processor 501 is further configured to determine the first set of resources by means of:
determining the first set of resources from the first transmission resource pool based on traffic transmitted to the set of second terminals.

Optionally, the processor 501 is specifically configured to:
notify the set of second terminals of the first set of resources; and/or notify each second terminal of a corresponding second set of resources;
where the second set of resources include second resources able to be used for transmission by the second terminal, and the first set of resources are different from the second set of resources.

Optionally, the processor 501 is further configured to determine the second set of resources by means of:
determining the second set of resources corresponding to each second terminal from a candidate resource pool based on the first set of resources in the first transmission resource pool of the first terminal;
where the candidate resource pool is a D2D interface reception resource pool or a pre-configured transmission resource pool.

Optionally, the processor 501 is specifically configured to:
use a part or all of resources which do not belong to the first set of resources in the candidate resource pool to form the second set of resources; and use the second set of resources as the second set of resources corresponding to each second terminal.

Optionally, the processor 501 is specifically configured to:
determine all resources which do not belong to the first set of resources in the candidate resource pool to form a specified set of resources; and
for one second terminal, determine from the specified set of resources a second set of resources corresponding to the second terminal based on traffic of the second terminal;
where the second set of resources corresponding to different second terminals are different.

Optionally, the processor 501 is specifically configured to configure for each second terminal by means of a part or all of the following:
a broadcast message of a D2D interface;
a dedicated message of the D2D interface; and
an MAC CE of the D2D interface.

Fig. 5 shows a bus architecture (represented by a bus 500), where the bus 500 may include any number of interconnected buses and bridges, and the bus 500 links various circuits together including one or more processors represented by a processor 501 and one or more memories represented by a memory 504. The bus 500 may also link various other circuits together such as periphery devices, voltage stabilizers and power management circuits, which are all known in the art and thus not further described herein. A bus interface 503 provides an interface between the bus 500 and the transceiver 502. The transceiver 502 may be one element, or may be a plurality of elements, such as a plurality of receivers and transmitters, to provide a unit for communicating with various other devices via a transmission medium. For example, the transceiver 502 receives external data from other devices. The transceiver 502 is configured to transmit data processed by the processor 501 to other devices. Depending on nature of a computing system, a user interface 505 may also be provided, such as a keypad, a display, a speaker, a microphone or a joystick.

The processor 501 is responsible for managing the bus 500 and general processing, such as running a general-purpose operating system. The memory 504 may be used for storing data used by the processor 501 when the processor 501 is performing operations.

Optionally, the processor 501 may be a Central Processing Unit (CPU), an Application Specific Integrated Circuit (ASIC), an Field-Programmable Gate Array (FPGA) or a Complex Programmable Logic Device (CPLD).

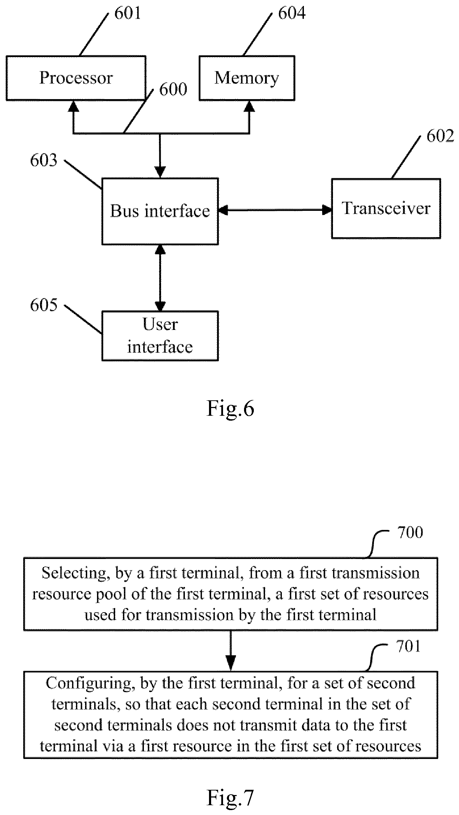

As shown in Fig. 6, another type of second terminal of a data transmission system according to an embodiment of the present disclosure includes:
a processor 601 configured to read a program from a memory 604 to perform the following operations:
determining a first set of resources in a first transmission resource pool of a first terminal, and a second set of resources corresponding to the second terminal in a candidate resource pool, based on configuration by the first terminal, where the candidate resource pool is a D2D interface reception resource pool or a pre-configured transmission resource pool; the first set of resources include first resources able to be used for transmission by the first terminal, and the second set of resources include second resources able to be used for transmission by the second terminal, and the first set of resources are different from the second set of resources; selecting from the second set of resources a second resource in a second transmission resource pool of the second terminal; and controlling transceiver 602 to transmit data to the first terminal via the selected second resource, but not to transmit data to the first terminal via a first resource in the first set of resources.

The transceiver 602 is configured to receive and transmit data under the control of the processor 601.

Optionally, the processor 601 is specifically configured to:
determine the first set of resources in the first transmission resource pool of the first terminal, and the second set of resources corresponding to the second terminal in the candidate resource pool, based on the second set of resources corresponding to the second terminal notified of by the first terminal and/or the first set of resources notified of by the first terminal.

Optionally, the processor 601 is further configured to:
transmit data to the first terminal via the selected second resource and via a resource which does not belong to the first set of resources in the second transmission resource pool of the second terminal, if the selected second resource is not enough for transmission of the data.

Optionally, the second terminal receives the notification from the first terminal by means of a part or all of the following:
a broadcast message of a D2D interface;
a dedicated message of the D2D interface; and
an MAC CE of the D2D interface.

Optionally, the first set of resources of the first terminal and the second set of resources of the second terminal are time-division multiplexed; and/or
the second set of resources corresponding to different second terminals are time-division multiplexed and/or frequency-division multiplexed.

Fig. 6 shows a bus architecture (represented by a bus 600), where the bus 600 may include any number of interconnected buses and bridges, and the bus 600 links various circuits together including one or more processors represented by a processor 601 and one or more memories represented by a memory 604. The bus 600 may also link various other circuits together such as periphery devices, voltage stabilizers and power management circuits, which are all known in the art and thus not further described herein. A bus interface 603 provides an interface between the bus 600 and the transceiver 602. The transceiver 602 may be one element, or may be a plurality of elements, such as a plurality of receivers and transmitters, to provide a unit for communicating with various other devices via a transmission medium. For example, the transceiver 602 receives external data from other devices. The transceiver 602 is configured to transmit data processed by the processor 601 to other devices. Depending on nature of a computing system, a user interface 605 may also be provided, such as a keypad, a display, a speaker, a microphone or a joystick.

The processor 601 is responsible for managing the bus 600 and general processing, such as running a general-purpose operating system. The memory 604 may be used for storing data used by the processor 601 when the processor 601 is performing operations.

Optionally, the processor 601 may be a CPU, an ASIC, an FPGAor a CPLD.

In implementation, for different scenarios, a terminal may be a first terminal or a second terminal, so functions of the first terminal and the second terminal may be combined in one entity (i.e. modules of the first terminal in Fig. 5 and the second terminal in Fig. 6 are in one entity), and the function of the first terminal or the function of the second terminal is selected for use according to need. Optionally, the combined entity may have two sets of modules, one as shown in Fig. 5 and the other as shown in Fig. 6; the modules in Figs. 5 and 6 may also be combined into one module, for example, the processor 501 and the processor 601 are combined into one processor, and the transceiver 502 and the transceiver 602 are combined into one transceiver, and other modules are similarly combined, which are not described here.

Based on the same inventive concept, a data transmission method is also provided according to an embodiment of the present disclosure. As the device corresponding to the method is the device of the data transmission system according to an embodiment of the present disclosure, and the principles for solving problems of the method are similar to those of the device, implementations of the method can be known with reference to implementations of the device, which will not be repeated here.

As shown in Fig. 7, a data transmission method according to an embodiment of the present disclosure includes:
operation 700, selecting, by a first terminal, from a first transmission resource pool of the first terminal, a first set of resources used for transmission by the first terminal; and
operation 701, configuring, by the first terminal, for a set of second terminals, so that each second terminal in the set of second terminals does not transmit data to the first terminal via a first resource in the first set of resources.

Optionally, the first terminal determines the first set of resources by means of:
determining, by the first terminal, the first set of resources from the first transmission resource pool based on traffic transmitted to the set of second terminals.

Optionally, configuring, by the first terminal, for each second terminal includes:
notifying, by the first terminal, the set of second terminals of the first set of resources; and/or
notifying, by the first terminal, each second terminal of a corresponding second set of resources;
where the second set of resources include second resources able to be used for transmission by the second terminal, and the first set of resources are different from the second set of resources.

Optionally, the first terminal determines the second set of resources by means of:
determining, by the first terminal, the second set of resources corresponding to each second terminal from a candidate resource pool based on the first set of resources in the first transmission resource pool of the first terminal;
where the candidate resource pool is a D2D interface reception resource pool or a pre-configured transmission resource pool.

Optionally, determining, by the first terminal, the second set of resources corresponding to each second terminal from a candidate resource pool based on the first set of resources in the first transmission resource pool of the first terminal includes:
using, by the first terminal, a part or all of resources which do not belong to the first set of resources in the candidate resource pool to form the second set of resources; and
using, by the first terminal, the second set of resources as the second set of resources corresponding to each second terminal.

Optionally, determining, by the first terminal, the second set of resources corresponding to each second terminal from a candidate resource pool based on the first set of resources in the first transmission resource pool of the first terminal includes:
determining, by the first terminal, all resources which do not belong to the first set of resources in the candidate resource pool to form a specified set of resources; and
for one second terminal, determining, by the first terminal, from the specified set of resources a second set of resources corresponding to the second terminal based on traffic of the second terminal;
where the second set of resources corresponding to different second terminals are different.

Optionally, the first terminal configures for each second terminal by means of a part or all of the following:
a broadcast message of a D2D interface;
a dedicated message of the D2D interface; and
an MAC CE of the D2D interface.

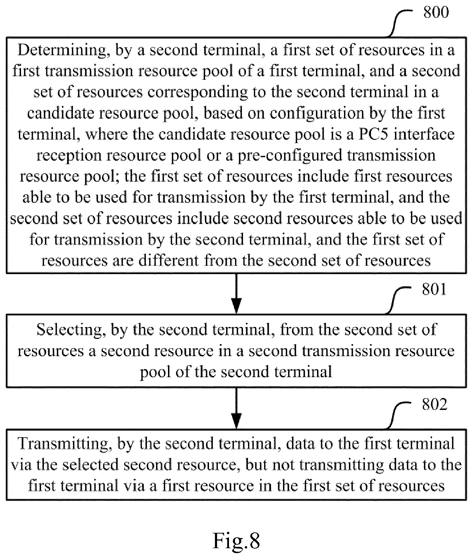

As shown in Fig. 8, a data transmission method according to an embodiment of the present disclosure includes:
operation 800, determining, by a second terminal, a first set of resources in a first transmission resource pool of a first terminal, and a second set of resources corresponding to the second terminal in a candidate resource pool, based on configuration by the first terminal, where the candidate resource pool is a D2D interface reception resource pool or a pre-configured transmission resource pool; the first set of resources include first resources able to be used for transmission by the first terminal, and the second set of resources include second resources able to be used for transmission by the second terminal, and the first set of resources are different from the second set of resources;
operation 801, selecting, by the second terminal, from the second set of resources a second resource in a second transmission resource pool of the second terminal; and
operation 802, transmitting, by the second terminal, data to the first terminal via the selected second resource, but not transmitting data to the first terminal via a first resource in the first set of resources.

Optionally, determining, by a second terminal, a first set of resources in a first transmission resource pool of a first terminal, and a second set of resources corresponding to the second terminal in a candidate resource pool, based on configuration by the first terminal includes:
determining, by the second terminal, the first set of resources in the first transmission resource pool of the first terminal, and the second set of resources corresponding to the second terminal in the candidate resource pool, based on the second set of resources corresponding to the second terminal notified of by the first terminal and/or the first set of resources notified of by the first terminal.

Optionally, transmitting, by the second terminal, data to the first terminal via the selected second resource further includes:
transmitting, by the second terminal, data to the first terminal via the selected second resource and via a resource which does not belong to the first set of resources in the second transmission resource pool of the second terminal, if the selected second resource is not enough for transmission of the data.

Optionally, the second terminal receives the notification from the first terminal by means of a part or all of the following:
a broadcast message of a D2D interface;
a dedicated message of the D2D interface; and
an MAC CE of the D2D interface.

Optionally, the first set of resources of the first terminal and the second set of resources of the second terminal are time-division multiplexed; and/or
the second set of resources corresponding to different second terminals are time-division multiplexed and/or frequency-division multiplexed.

As can be seen from the above description, in the embodiments of the present disclosure, a first terminal selects from a first transmission resource pool of the first terminal a first set of resources used for transmission by the first terminal; and configures a set of second terminals, so that each second terminal does not transmit data to the first terminal via first resource in the first set of resources, as the second terminal do not transmit data to the first terminal via the first resource in the first set of resources, package loss resulting from the fact that a UE cannot receive, when transmitting data, data transmitted at the same time by other UEs are avoided, and transmission efficiency is improved.

Those skilled in the art should understand that the embodiments of the present disclosure can be provided as a method, a system or a computer program product. Therefore, the present disclosure may be in the form of an all-hardware embodiment, an all-software embodiment, or a software and hardware combined embodiment. Moreover, the present disclosure may also be in the form of a computer program product that can be implemented on one or more computer usable storage media (including but not limited to magnetic disc memories, CD-ROMs, optical memories) containing computer usable program codes.

The present disclosure is described with reference to the flow diagrams and/or block diagrams of the method, device (system) and computer program product of the embodiments of the present disclosure. It should be understood that each process and/or block in the flow diagrams and/or block diagrams, as well as combinations of processes and/or blocks in the flow diagrams and/or block diagrams can be implemented by computer program instructions. The computer program instructions can be provided to a processor of a general purpose computer, a special purpose computer, an embedded processor or other programmable data processing device to produce a machine, so that the instructions processed by the processor of the computer or other programmable data processing device generates a device for achieving functions specified in one or more processes of the flow diagrams and/or one or more blocks of the block diagrams.

The computer program instructions may also be stored in a computer readable memory that can instruct a computer or other programmable data processing device to operate in a specified manner, so that the instructions stored in the computer readable memory generates a manufacture containing an instruction device, where the instruction device achieves the functions specified in one or more processes of the flow diagrams and/or one or more blocks of the block diagrams.

The computer program instructions may also be loaded to a computer or other programmable data processing device, so that a series of operation operations are executed on the computer or other programmable data processing device to generate computer implemented processing, so that the instructions executed on the computer or other programmable data processing device provide operations for achieving functions specified in one or more processes of the flow diagrams and/or one or more blocks of the block diagrams.

The preferred embodiments of the present disclosure are described above; however, with basic creative concepts, those skilled in the art can make additional variations and modifications to these embodiments. Therefore, the appended claims are intended to be interpreted as including the preferred embodiments and all variations and modifications within the scope of the present disclosure.

Apparently, those skilled in the art can make changes and modifications to the present disclosure without departing from the spirit and scope of the present disclosure. As such, the present disclosure is also intended to encompass these changes and modifications if such changes and modifications of the present disclosure are within the scope of the claims of the present disclosure and equivalents thereof.

## Claims

1. A data transmission method, the method comprising:
selecting, by a first terminal, from a first transmission resource pool of the first terminal, a first set of resources used for transmission by the first terminal;
configuring, by the first terminal, for a set of second terminals, so that each second terminal in the set of second terminals does not transmit data to the first terminal via a first resource in the first set of resources.

2. The method according to claim 1, wherein the first terminal determines the first set of resources by means of:
determining, by the first terminal, the first set of resources from the first transmission resource pool based on traffic transmitted to the set of second terminals.

3. The method according to claim 1, wherein configuring, by the first terminal, for each second terminal comprises:
notifying, by the first terminal, the set of second terminals of the first set of resources;
and/or
notifying, by the first terminal, each second terminal of a corresponding second set of resources;
wherein the second set of resources comprise second resources able to be used for transmission by the second terminal, and the first set of resources are different from the second set of resources.

4. The method according to claim 3, wherein the first terminal determines the second set of resources by means of:
determining, by the first terminal, the second set of resources corresponding to each second terminal from a candidate resource pool based on the first set of resources in the first transmission resource pool of the first terminal;
wherein the candidate resource pool is a device to device (D2D) interface reception resource pool or a pre-configured transmission resource pool.

5. The method according to claim 4, wherein determining, by the first terminal, the second set of resources corresponding to each second terminal from a candidate resource pool based on the first set of resources in the first transmission resource pool of the first terminal comprises:
using, by the first terminal, a part or all of resources which do not belong to the first set of resources in the candidate resource pool to form the second set of resources; and using the second set of resources as the second set of resources corresponding to each second terminal; or
determining, by the first terminal, all resources which do not belong to the first set of resources in the candidate resource pool to form a specified set of resources; and for one second terminal, determining, by the first terminal, from the specified set of resources a second set of resources corresponding to the second terminal based on traffic of the second terminal.

6. The method according to any one of claims 1-5, wherein the first terminal configures for each second terminal by means of a part or all of the following:
a broadcast message of a D2D interface;
a dedicated message of the D2D interface; and
a Media Access Control layer Control Element (MAC CE) of the D2D interface.

7. A data transmission method, the method comprising:
determining, by a second terminal, a first set of resources in a first transmission resource pool of a first terminal, and a second set of resources corresponding to the second terminal in a candidate resource pool, based on configuration by the first terminal, wherein the candidate resource pool is a D2D interface reception resource pool or a pre-configured transmission resource pool; the first set of resources comprise first resources able to be used for transmission by the first terminal, and the second set of resources comprise second resources able to be used for transmission by the second terminal, and the first set of resources are different from the second set of resources;
selecting, by the second terminal, from the second set of resources a second resource in a second transmission resource pool of the second terminal; and
transmitting, by the second terminal, data to the first terminal via the selected second resource, but not transmitting data to the first terminal via a first resource in the first set of resources.

8. The method according to claim 7, wherein determining, by a second terminal, a first set of resources in a first transmission resource pool of a first terminal, and a second set of resources corresponding to the second terminal in a candidate resource pool, based on configuration by the first terminal, comprises:
determining, by the second terminal, the first set of resources in the first transmission resource pool of the first terminal, and the second set of resources corresponding to the second terminal in the candidate resource pool, based on the second set of resources corresponding to the second terminal notified of by the first terminal and/or the first set of resources notified of by the first terminal.

9. The method according to claim 7, wherein transmitting, by the second terminal, data to the first terminal via the selected second resource further comprises:
transmitting, by the second terminal, data to the first terminal via the selected second resource and via a resource which does not belong to the first set of resources in the second transmission resource pool of the second terminal, if the selected second resource is not enough for transmission of the data.

10. The method according to any one of the claims 7-9, wherein the second terminal receives a notification from the first terminal by means of a part or all of the following:
a broadcast message of a D2D interface;
a dedicated message of the D2D interface; and
an MAC control element of a D2D interface.

11. The method according to any one of claims 7-9, wherein the first set of resources of the first terminal and the second set of resources of the second terminal are time-division multiplexed; and/or
the second set of resource corresponding to different second terminals are time-division multiplexed and/or frequency-division multiplexed.

12. A first terminal for data transmission, the first terminal comprising:
a first selection module configured to select, from a first transmission resource pool of the first terminal, a first set of resources used for transmission by the first terminal;
a configuration module configured to configure for a set of second terminals, so that each second terminal in the set of second terminals does not transmit data to the first terminal via a first resource in the first set of resources.

13. The first terminal according to claim 12, wherein the first selection module is further configured to determine the first set of resources by means of:
determining the first set of resources from the first transmission resource pool based on traffic transmitted to the set of second terminals.

14. The first terminal according to claim 12, wherein the configuration module is specifically configured to:
notify the set of second terminals of the first set of resources; and/or notify each second terminal of a corresponding second set of resources;
wherein the second set of resources comprise second resources able to be used for transmission by the second terminal, and the first set of resources are different from the second set of resources.

15. The first terminal according to claim 14, wherein the first selection module is further configured to determine the second set of resources by means of:
determining the second set of resources corresponding to each second terminal from a candidate resource pool based on the first set of resources in the first transmission resource pool of the first terminal;
wherein the candidate resource pool is a D2D interface reception resource pool or a pre-configured transmission resource pool.

16. The first terminal according to claim 15, wherein the first selection module is specifically configured to:
use a part or all of resources which do not belong to the first set of resources in the candidate resource pool to form the second set of resources; and use the second set of resources as the second set of resources corresponding to each second terminal; or
determine all resources which do not belong to the first set of resources in the candidate resource pool to form a specified set of resources; and for one second terminal, determine from the specified set of resources a second set of resources corresponding to the second terminal based on traffic of the second terminal;
wherein the second set of resources corresponding to different second terminals are different.

17. A second terminal for data transmission, comprising:
a determination module configured to determine a first set of resources in a first transmission resource pool of a first terminal, and a second set of resources corresponding to the second terminal in a candidate resource pool, based on configuration by the first terminal, wherein the candidate resource pool is a D2D interface reception resource pool or a pre-configured transmission resource pool; the first set of resources comprise first resources able to be used for transmission by the first terminal, and the second set of resources comprise second resources able to be used for transmission by the second terminal, and the first set of resources are different from the second set of resources;
a second selection module configured to select from the second set of resources a second resource in a second transmission resource pool of the second terminal; and
a transmission module configured to transmit data to the first terminal via the selected second resource, but not to transmit data to the first terminal via a first resource in the first set of resources.

18. The second terminal according to claim 17, wherein the determination module is specifically configured to:
determine the first set of resources in the first transmission resource pool of the first terminal, and the second set of resources corresponding to the second terminal in the candidate resource pool, based on the second set of resources corresponding to the second terminal notified of by the first terminal and/or the first set of resources notified of by the first terminal.

19. The second terminal according to claim 17, wherein the transmission module is further configured to:
transmit data to the first terminal via the selected second resource and via a resource which does not belong to the first set of resources in the second transmission resource pool of the second terminal, if the selected second resource is not enough for transmission of the data.
